# EUROPÄISCHE PATENTANMELDUNG

(11) **EP 1 562 089 A2**
(43) Veröffentlichungstag der Anmeldung: **10.08.2005**
(21) Anmeldenummer: 05001652.6
(22) Anmeldetag: 27.01.2005
(51) Int. Cl.: G05B 19/23

(54) **Vorrichtung und Verfahren zur vertikalen oder horizontalen Bewegungssteuerung einer Last**

(30) Priorität: 04.02.2004 DE 102004005637
(71) Anmelder: GfA - Gesellschaft für Antriebstechnik Dr.-Ing. Hammann GmbH & Co. KG, 40549 Düsseldorf (DE); GTE Gesellschaft für pyhs. Technologie und Elektronik mbH, 41747 Viersen (DE)
(72) Erfinder: Synowsky, Bernd, 40764 Langenfeld (DE); Laurs, Heinz, Dr., 51334 Nettetal (DE)
(74) Vertreter: Cohausz & Florack

(57) **Zusammenfassung**

Die Erfindung betrifft eine Vorrichtung zur vertikalen oder horizontalen Bewegungssteuerung einer Last (3) entsprechend einem vorgebbaren Geschwindigkeitsprofil mit einem den Öffnungsabschluss über ein Getriebe (2) antreibenden Elektromotor (1), dem eine elektronische Regeleinrichtung (4) zugeordnet ist, wobei die Regeleinrichtung (4) erste Sensormittel zur Ermittlung der aktuellen Position (x) der Last auf der Bewegungsachse und weitere Sensormittel zur Erfassung der aktuellen Geschwindigkeit (V) der Last (3) sowie Stellmittel (5) zur Ansteuerung eines Leistungsteils für den Elektromotor (1) aufweist. Um in jedem Ort der vertikalen Bewegung der Last eine Regelung auf kostengünstige Weise zu ermöglichen ist vorgesehen, dass die Stellmittel eine Einrichtung zur digitalen Steuerung des Phasenanschnitts der Motorspannung aufweisen und dass die Erfassung der aktuellen Geschwindigkeitsdaten am Ausgang des als selbstbremsend ausgestalteten Getriebes (2) erfolgt.

## Beschreibung

Die Erfindung betrifft eine Vorrichtung zur vertikalen oder horizontalen Bewegungssteuerung einer Last entsprechend einem vorgebbaren Geschwindigkeitsprofil mit einem den Öffnungsabschluss über ein Getriebe antreibenden Elektromotor, dem eine elektronische Regeleinrichtung zugeordnet ist, wobei die Regeleinrichtung erste Sensormittel zur Ermittlung der aktuellen Position der Last auf der Bewegungsachse und weitere Sensormittel zur Erfassung der aktuellen Geschwindigkeit der Last sowie Stellmittel zur Ansteuerung eines Leistungsteils für den Elektromotor aufweist und ein darauf gerichtetes Verfahren.

Bei der vertikalen oder horizontalen Bewegungssteuerung einer Last kommt es darauf an, dass die Last, z.B. ein schnell laufendes Tor einerseits in möglichst kurzer Zeit vom unteren / geöffneten in den oberen / geschlossenen Zustand bzw. umgekehrt bewegt wird. Dazu weisen bekannte Bewegungssteuerungen Sensoren auf, die beim Erreichen der jeweiligen Endstellungen (oben, unten) aktiviert werden. Bei anderen Lasten, z.B. für Gegenstände wie Lebensmittel, kommt es darauf an, dass neben dem sicheren Erreichen der Anfangs- bzw. Endpositionen, Beschleunigungsspitzen vermieden werden. Dies gilt sowohl für die Betriebsphase "Anlaufen" beim Beschleunigen der Last als auch für die Betriebsphase "Abbremsen" vor dem Erreichen des ruhenden Endzustandes.

Bei anderen Anwendungsfällen kommt es darauf an, Lasten entlang eines bestimmten vertikalen Streckenbereichs aus Sicherheitsgründen nur mit einer zulässigen Maximalgeschwindigkeit zu bewegen, während außerhalb dieses Streckenbereichs eine höhere Geschwindigkeit zugelassen ist. Dies gilt beispielsweise für Schnelllauftore.

Eine Vorrichtung der eingangs genannten Art ist aus der DE 37 41 133 bekannt. Bei dieser Vorrichtung arbeitet der von einer elektronischen Regeleinrichtung gesteuerte Elektromotor mit einer Federdruckbremse zusammen, deren Bremskraft von der elektronischen Regelung beeinflußt wird, dahingehend, dass im Anlaufbereich der Bewegungssteuerung die Bremse gelöst ist und im Abbremsbereich durch die Steuerung der Bremse ein sanftes Abbremsen erreicht wird. Hierzu ist in den genannten Zuständen (Anlaufbereich, Abbremsbereich) der Bewegungssteuerung eine analoge Regelung zugeordnet, die nach dem Prinzip der Frequenzumsetzung den Asynchronmotor steuert. Bei dieser Vorrichtung ist es als nachteilig anzusehen, dass außerhalb des Anlauf- bzw. Abbremsbetriebs keine Regelung des Motors möglich ist, weil dieser über entsprechende Schaltmittel (Schütze) direkt am Netz liegt. Ein weiterer Nachteil ist darin zu sehen, dass die beim Stand der Technik verwendete analoge Regelungstechnik mittels Frequenzumsetzer sehr kostenaufwendig ist.

Der Erfindung liegt davon ausgehend die Aufgabe zugrunde, eine Vorrichtung bzw. ein Verfahren der eingangs genannten Art dahingehend weiterzuentwickeln, dass in jedem Ort der vertikalen oder horizontalen Bewegung der Last eine Regelung auf kostengünstige Weise ermöglicht wird.

Diese Aufgabe wird bei einer Vorrichtung der eingangs genannten Art dadurch gelöst, dass die Stellmittel eine Einrichtung zur digitalen Steuerung des Phasenanschnitts der Motorspannung aufweisen und dass die Erfassung der aktuellen Geschwindigkeitsdaten am Ausgang des als selbstbremsend ausgestalteten Getriebes erfolgt.

Bei einem Verfahren zur vertikalen oder horizontalen Bewegungssteuerung einer Last entsprechend einem vorgebbaren Geschwindigkeitsprofil mittels eines die Last über ein Getriebe antreibenden Elektromotors, bei dem als ein Istwert die aktuelle Position der Last und als weiterer Istwert deren aktuelle Geschwindigkeit erfasst und einer elektronischen Regelung zugeführt werden, und bei dem aus der Regeldifferenz über ein Stellglied ein Leistungsteil zur Versorgung des Elektromotors angesteuert wird, wird diese Aufgabe dadurch gelöst, dass die Ansteuerung des Elektromotors digital und mittels Phasenanschnitt der Motorspannung erfolgt und dass die aktuellen Geschwindigkeitsdaten am Ausgang des als selbstbremsend ausgestalteten Getriebes erfasst werden, derart, dass zu jedem Ort entlang des vorgebbaren Geschwindigkeitsprofils die Regelung aktiv ist.

Die erfindungsgemäße Lösung zeichnet sich dadurch aus, dass die Gewinnung der für die digitale Regelung mittels Phasenanschnittssteuerung erforderlichen Istwerte für die aktuelle Geschwindigkeit am Ausgang des als selbstbremsend ausgestalteten Getriebes erfolgt, d.h., dass beispielsweise im Bremsbetrieb die Getriebekennlinie in das Regelverhalten der elektronischen Regelung mit einbezogen wird. Abgesehen von den Kostenvorteilen, die eine Phasenanschnittssteuerung bietet, wird hiermit der Vorteil erreicht, dass an jedem Ort (vertikaler bzw. Horizontaler Streckenpunkt) des gewünschten Geschwindigkeitsprofils ein Eingriff der Regelung ermöglicht wird, so dass auch bei dem beim Stand der Technik von der Regelung unberührten Zwischenbereich zwischen Anfahren und Bremsen eine beliebige Vorgabe des Geschwindigkeitsverlaufes ermöglicht wird. Hierzu ist das den Elektromotor ansteuernde Leistungsteil als Bestandteil des digitalen Regelkreises während des gesamten Geschwindigkeitsprofils aktiviert.

Mittels der erfindungsgemäßen Lösung lassen sich als Last sowohl Öffnungsabschlüsse, wie Tore, insbesondere Schnelllauftore, bevorzugt antreiben, aber auch Aufzüge, insbesondere Lastenaufzüge, bei denen es auf möglichst ruckfreies Transportieren einer Last ankommt, z.B. im Gastronomiebereich.

Schließlich ist die erfindungsgemäße Lösung auch anwendbar zur Steuerung von Bühnenvorhängen, bei denen es aus dramaturgischen Gründen gewünscht sein kann, beliebig vorgebbare Geschwindigkeitsprofile bei der vertikalen Bewegung zu fahren.

Eine bevorzugte Ausgestaltung der Erfindung sieht vor, dass der digitalen Regelung eine Speichereinheit zugeordnet ist, in der die digitalen Sollwerte für das Geschwindigkeitsprofil abgelegt sind. Dabei können diese Sollwerte einmal werkseitig zur Vorgabe eines Standardgeschwindigkeitsprofils eingestellt werden. Es ist aber auch nach einer weiteren Variante der Erfindung möglich, dass diese Vorgabesollwerte adaptiv erzeugt werden, z.B. durch Erfahrungswerte beim Testbetrieb einer Bewegungssteuerung vor Ort. Angewendet auf Torsteuerungen lassen sich diese Erfahrungsinhalte für verschiedene Wegbereiche, d.h. Torpositionsabschnitte, differenziert nach der Bewegungsrichtung auf/ab für alle denkbaren Wegabschnitte erzeugen. Andererseits lassen sich die Sollvorgabewerte auch aufgrund von Erfahrungsinhalten für verschiedene Tortypen vorgeben, so dass insgesamt eine automatische Anpassung aller für die Regelung erforderlichen Parameter für den jeweiligen Typ des Öffnungsabschlusses ermöglicht wird.

Eine weitere Ausgestaltung der Erfindung sieht vor, dass der digitalen Regelung eine Berechnungseinheit zur Berechnung des jeweils am aktuellen Ort des Geschwindigkeitsprofils geltenden Kraftwertes zugeordnet ist. Diese Variante ist wichtig mit Hinblick auf bestehende oder künftige Sicherheitsanforderungen bei kraftbetätigten Öffnungsabschlüssen (wie z.B. Schnelllauftoren).

Die Erfindung wird im folgenden anhand von Zeichnungen, die ein Ausführungsbeispiel zeigen, näher erläutert.

Dabei zeigen:
- Fig. 1: eine Skizze für ein Geschwindigkeitsprofil für die vertikale Steuerung einer Last,
- Fig. 2: ein Blockschaltbild eines Ausführungsbeispiels einer erfindungsgemäßen Vorrichtung zur vertikalen Bewegungssteuerung einer Last.

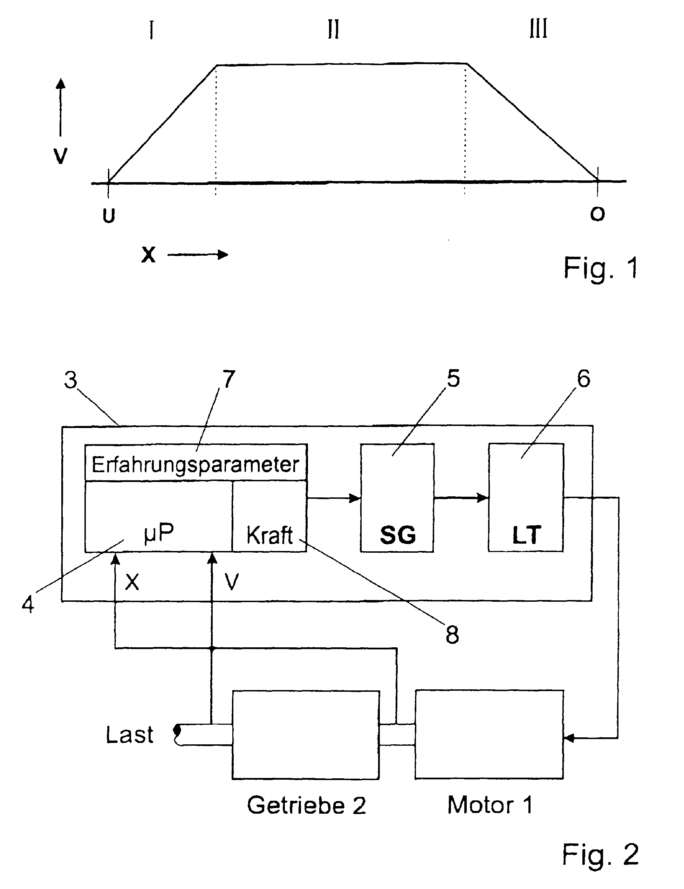

Das in Figur 1 dargestellte Geschwindigkeitsprofil zeigt den Verlauf der Geschwindigkeit V einer Last während ihrer vertikalen Bewegung zwischen einem oberen Endpunkt O und einem unteren Endpunkt U. Die Bewegung gliedert sich in drei Abschnitte I,II,III. Im Bereich I wird die Last mit zunehmender Geschwindigkeit beschleunigt, bis die Geschwindigkeit am Übergangsbereich zum mittleren Bereich II einen konstanten Wert erreicht. Dieser Wert wird gehalten, bis zum Beginn des Abbremsbereichs III, in dessen Verlauf die Geschwindigkeit reduziert wird, bis beim Erreichen des unteren Endpunktes U die Geschwindigkeit wieder Null beträgt. Es versteht sich, dass das dort dargestellte Geschwindigkeitsprofil lediglich ein Beispiel ist und dass je nach Anwendungsfall der Bewegung einer Last andere Profile gewünscht sein können. Beispielsweise muss dann, wenn ein möglichst ruckfreies Transportieren einer Last in vertikaler Richtung gewünscht ist, darauf geachtet werden, dass die Beschleunigung (dV/dx) möglichst konstant ist.

Figur 2 zeigt den Aufbau einer Vorrichtung zur digitalen Bewegungssteuerung einer Last L, die von einem Motor 1 über ein Getriebe 2 angetrieben wird. Von der Motorwelle abgeleitet werden in bekannter Weise, beispielsweise über Istwerte für die Geschwindigkeit V der Last und diese an eine digitale Regeleinrichtung 3 als ein erster Istwert übertragen. Als ein weiterer Istwert wird vom Getriebe 2, welches als selbstbremsendes Getriebe ausgebildet ist, an dessen Ausgang der Istwert für die aktuelle vertikale bzw. horizontale Position X ermittelt und ebenfalls als Eingangsgröße an die digitale Regelung 3 gegeben. Es versteht sich, dass die Regelgröße der vertikalen bzw. horizontalen Position X mittels eines Referenzpunktes von Geschwindigkeitsgröße V hergeleitet werden kann. Eine Herleitung der Geschwindigkeitsgröße V ist aus der vertikalen bzw. horizontalen Position X ebenfalls möglich.

In der digitalen Regeleinrichtung 3 ist ein Mikroprozessor 4 vorgesehen, welcher durch Vergleich der Istwerte X,V mit vorabgespeicherten Sollwerten eine Regeldifferenz errechnet und diese an ein Stellglied 5 abgibt. Das Stellglied 5 arbeitet auf ein Leistungsteil 6, welches über das Getriebe 2 den Motor 1 steuert. Die Funktionsweise der digitalen Regelung erfolgt nach dem Prinzip der Phasenanschnittssteuerung.

Vorzugsweise sind dem Mikroprozessor 4 Sollwerte 7 zugeordnet, die als sogenannte Erfahrungsparameter vorabgespeichert sind. D.h., es handelt sich um solche Parameter, die sich durch Testbetrieb vor Ort im jeweiligen Anwendungsfall ergeben und somit vom Benutzer frei vorgebbar sind.

Auf diese Weise lässt sich die beschriebene Vorrichtung so handhaben, dass ein beliebig vorprogrammierbares Geschwindigkeitsprofil verwendet wird, mittels welchem auf alle Anforderungen an die Bewegungssteuerung flexibel reagiert werden kann, beispielsweise auf möglichst schnelles Öffnen und Schließen unter Berücksichtigung der zulässigen Antriebs- und Bremsmomente oder mit Hinblick auf möglichst ruckfreies Transportieren einer Last oder mit Hinblick auf Sicherheitsaspekte unter Einhaltung einer zulässigen Höchstgeschwindigkeit für den Öffnungsabschluss.

## Patentansprüche

1. Vorrichtung zur vertikalen oder horizontalen Bewegungssteuerung einer Last (3) entsprechend einem vorgebbaren Geschwindigkeitsprofil über ein Getriebe (2) antreibenden Elektromotor (1), dem eine elektronische Regeleinrichtung (4) zugeordnet ist, wobei die Regeleinrichtung (4) erste Sensormittel zur Ermittlung der aktuellen Position (x) der Last auf der Bewegungsachse und weitere Sensormittel zur Erfassung der aktuellen Geschwindigkeit (V) der Last (3) sowie Stellmittel (5) zur Ansteuerung eines Leistungsteils für den Elektromotor (1) aufweist,
**dadurch gekennzeichnet, dass** die Stellmittel eine Einrichtung zur digitalen Steuerung des Phasenanschnitts der Motorspannung aufweisen und dass die Erfassung der aktuellen Geschwindigkeitsdaten am Ausgang des als selbstbremsend ausgestalteten Getriebes (2) erfolgt.

2. Verfahren zur vertikalen oder horizontalen Bewegungssteuerung einer Last (3) entsprechend einem vorgebbaren Geschwindigkeitsprofil mittels eines die Last über ein Getriebe (2) antreibenden Elektromotors (1), bei dem als ein Istwert die aktuelle Position der Last und als weiterer Istwert deren aktuelle Geschwindigkeit erfasst und einer elektronischen Regelung zugeführt werden, und bei dem aus der Regeldifferenz über ein Stellglied ein Leistungsteil zur Versorgung des Elektromotors angesteuert wird,
**dadurch gekennzeichnet, dass** die Ansteuerung des Elektromotors digital und mittels Phasenanschnitt der Motorspannung erfolgt und dass die aktuellen Geschwindigkeitsdaten am Ausgang des als selbstbremsend ausgestalteten Getriebes (2) erfasst werden, derart, dass zu jedem Ort entlang des vorgebbaren Geschwindigkeitsprofils die Regelung aktiv ist.

3. Vorrichtung und Verfahren nach Anspruch 1 oder 2,
**dadurch gekennzeichnet, dass** das Geschwindigkeitsprofil einen Anlaufbereich (I) mit im wesentlichen konstanter Zunahme der Geschwindigkeit (V), einen Mittelbereich (II) mit im wesentlichen konstanter Geschwindigkeit (V) und einen Abbremsbereich (III) mit im wesentlichen konstanter Abnahme der Geschwindigkeit (V) aufweist.

4. Vorrichtung und Verfahren nach einem der Ansprüche 1 oder 2,
**dadurch gekennzeichnet, dass** der digitalen Regelung eine Speichereinheit zugeordnet ist, in der digitale Sollwerte für das Geschwindigkeitsprofil abgelegt sind.

5. Vorrichtung und Verfahren nach Anspruch 4,
**dadurch gekennzeichnet, dass** die Werte der Speichereinheit aus auf Erfahrungsinhalten beruhenden Vorgabeparametern, insbesondere für vorbestimmte Positionsabschnitte der Last oder für vorbestimmte Typen von Lasten, abgeleitet sind.

6. Vorrichtung und Verfahren nach einem der Ansprüche 1 oder 2,
**dadurch gekennzeichnet, dass** der digitalen Regelung eine Berechnungseinheit zur Berechnung des jeweils am aktuellen Ort des Geschwindigkeitsprofils geltenden Kraftwertes zugeordnet ist.

7. Vorrichtung und Verfahren nach Anspruch 1 oder 2,
**dadurch gekennzeichnet, dass** die Last ein Öffnungsabschluss (3) ist.

8. Vorrichtung und Verfahren nach Anspruch nach 7,
**dadurch gekennzeichnet, dass** der Öffnungsabschluss ein Tor, insbesondere ein Schnelllauftor, ist.

9. Vorrichtung und Verfahren nach Anspruch 1 oder 2,
**dadurch gekennzeichnet, dass** der Öffnungsabschluss ein Bühnenvorhang ist.

10. Vorrichtung und Verfahren nach Anspruch 1 oder 2,
**dadurch gekennzeichnet, dass** der Öffnungsabschluss ein Aufzug, insbesondere ein Lastenaufzug ist.
